# EUROPEAN PATENT SPECIFICATION

(11) **EP 3 489 452 B1**
(45) Date of publication and mention of the grant of the patent: **22.12.2021**
(21) Application number: 17204103.0
(22) Date of filing: 28.11.2017
(51) Int. Cl.: E06B 9/262, E06B 9/322

(54) **DRIVE ASSEMBLY FOR TOP DOWN BOTTOM UP BLINDS**
ANTRIEBSANORDNUNG FÜR TOP-DOWN-BOTTOM-UP-JALOUSIEN
ENSEMBLE D'ENTRAÎNEMENT POUR STORES DESCENDANTS ET ASCENDANTS

(43) Date of publication of application: 29.05.2019
(73) Proprietor: Brel Nederland B.V., 7006 RW Doetinchem (NL)
(72) Inventor: Budding, Erik Willem Alexander, 3972 TW Driebergen (NL); Arts, Reinoud Johannes Wilhelmus Maria, 7035 CX Kilder (NL)
(74) Representative: Nederlandsch Octrooibureau

(56) References cited:
- US-A1- 2012 200 247
- US-A1- 2013 075 045
- US-A1- 2014 000 816

## Description

### Field of the invention

The present invention relates to a drive assembly for top-down bottom-up blinds. The invention further relates to a blinds system comprising top-down bottom-up blinds.

### Background art

Such a top-down bottom-up blinds system is known from US patent application 2012/0200247. It shows an architectural openings covering system comprising two motors having parallel drive shafts in a top rail, wherein the motors are in a so-called master-slave configuration. The first motor is configured to move a middle rail and the second motor is configured to move a bottom rail. This system has limitations in the different possible combinations of rail positions and occupies a relatively large space thus requires a large top rail.

An object of the invention is to provide a drive assembly which reduces at least one of the problems of the prior art.

### Summary of the invention

According to the invention, there is provided a drive assembly for a top down bottom up blinds system, comprising blinds which are limited in movement between a middle bar and a bottom bar, wherein the drive assembly comprises a first motor, a second motor and a control unit, and wherein the first motor is adapted to control the position of the middle bar, the second motor is adapted to control the position of the bottom bar, both motors are driven by the control unit, and the two motors and the control unit are accommodated in a single housing, such that the drive assembly forms a pre-assembled unit.

The blinds are fixed to the middle bar and bottom bar such that their position and spread is determined by positions of the middle bar and bottom bar. When the middle bar and top bar are in the withdrawn, initial positions close to a fixed top bar, the blinds are folded or rolled up. To unfold or unroll the blinds, the bottom bar can be moved down to block part of the sunlight. After the bottom bar has moved down significantly, the middle bar can be moved down for a certain distance as well, in order to allow some light to pass between the fixed top bar and the middle bar.

An advantage of the invention as described herein is that both motors can operate in principle independent, but are both driven by a single control unit, such that their relative position is controlled and collision of the middle bar and top bar is prevented by the control unit.

Furthermore, the housing forms a pre-assembled unit that can be manufactured separately, and placed into the blinds system afterwards, e.g. in the fixed top bar. This benefits easy manufacturing of the blinds system and replacement of the drive assembly. Furthermore, having a pre-assembled motor unit allows easy assignment of each motor to its function of either moving the middle bar or the bottom bar. In other words, it reduces the probability of mistakes during placement of the drive assembly. The control unit may further comprise a reset and programming button which may be accessed from outside the housing, and which may be used for resetting and programming the control unit. The housing may be a metal tube, with the first motor and the control unit slid in from one side, and the second motor slid in from the other side. The control unit may be powered with a battery, which may be positioned close to the drive assembly, e.g. in the fixed top bar.

According to the invention, the first motor comprises a first drive shaft and the second motor comprises a second drive shaft, and the first drive shaft and the second drive shaft share the same longitudinal axis.

When the first and second drive shafts extend along the same axis, the two motors consume less space in the top bar compared to when their drive shafts would extend parallel to each other.

According to an embodiment, the first drive shaft is connected to one or more first spools, bobbins or reels which can wind one or more cords connected to the middle bar. Possibly this connection takes place via a transmission system, e.g. using gear wheels. The second drive shaft is connected to one or more second spools which can wind one or more cords connected to the bottom bar. In this context, cords may also refer to chains, wires, yarns, cables or other similar components. Furthermore, in this manner all spools are placed along a linear axis. If the plane defined by the blinds between the middle bar and top bar extends vertically, this linear axis is preferably vertically aligned with the middle bar and bottom bar. In this way all cords may extend perfectly vertical, which reduces the tensile force in the cords with respect to the blinds system in the prior art.

According to an embodiment, the first drive shaft extends from the first motor in a first direction, and the second drive shaft extends from the second motor in a direction opposite to the first direction.

The motors may be placed back to back, meaning opposite to each other, in the housing. As both motors are centrally located in the housing, they can be connected to the control unit with as little wiring as possible. The drive shafts extend both in directions which are preferably parallel to the middle bar and bottom bar.

According to an embodiment, at least one motor is an electronically commutated motor, preferably wherein both motors are electronically commutated motors, which are separately commutated.

According to an embodiment, an end position of the bottom bar is predefined in the control unit, and wherein the control unit is adapted to control the movement of the middle bar, which is limited between the top bar and the bottom bar, and wherein the control unit is adapted to control the movement of the bottom bar, which is limited between the middle bar and the end position.

The blinds are disposed between and attached to the middle bar and the bottom bar. The end position of the bottom bar may be manually settable during use of the drive assembly, or it may be set during manufacture of the drive assembly. A user may either buy a blinds system with a predefined end position, or she/he may be able to set the end position her/himself after mounting the blinds system, using an easy one-time initialisation procedure described in e.g. a manual.

According to an embodiment, the drive assembly further comprises counting systems for counting the number of rotations of the first drive shaft and the second drive shaft, preferably wherein the counting systems are first and second magnet switches.

The counting systems may be optical, mechanical, magnetic or electronical. They may also be implemented in the motors themselves. They may comprise magnetic rings attached to the drive shafts. The number of rotations is used as input into the control unit and for actuating the middle bar and bottom bar. This allows for a digital control of the rotations of the drive shafts, enabling programming of the positioning of the middle bar and bottom bar.

According to an embodiment, the numbers of rotations of the first drive shaft and second drive shaft are stored in a memory unit. The memory unit may be comprised in the control unit. The memory unit may be integrated with the control unit.

According to an embodiment, the control unit is adapted to determine the positions of the middle bar and bottom bar based on the number of rotations of the first drive shaft and the second drive shaft.

According to an embodiment, the control unit is adapted to prevent collision of the middle bar and the bottom bar, by maintaining a rotation difference between the number of rotations of the first drive shaft and the number of rotations of the second drive shaft which is larger than a minimum value defined by a vertical size of the middle bar and a minimum vertical distance of the blinds.

By knowing the number of rotations of the first drive shaft, and thus of the spools connected to it, the control unit can determine how much cord has been released from the spool, and thus how far the middle bar has travelled from the top bar, assuming that an initial position is known. By knowing the number of rotations of the second drive shaft, and thus of the spools connected to it, the control unit can determine how much cord has been released from the spool, and thus how far the bottom bar has travelled from the top bar, assuming that an initial position is known. Since the control unit controls the first and second motors, it controls automatically the number of rotations. In this way, the control unit can make sure that the bottom bar does not travel further from the fixed top bar than the end position. At the same time, it can make sure that the middle bar does not travel further than an ultimate location which is slightly higher than the end position of the bottom bar. The ultimate location of the middle bar is determined by the minimum vertical distance of the pack of blinds and the vertical size of the middle bar, since these components are disposed between the middle bar and the bottom bar. Since this minimum vertical distance can be expressed in a number of rotations, the control unit can control this ultimate location without the need of power feedback from the motors. In this way collision between the middle bar and the bottom bar is prevented. Similarly, the ultimate positions of the middle bar and bottom bar at the top side, close to the fixed top bar, may be defined in terms of numbers of rotations of the first and second drive shafts.

This method of limiting the movement of the middle bar and bottom bar is preferred over a method that is known in the art, which uses rapid changes in the power consumed by the motors to determine whether an end position is reached. Rapid power changes may happen when the respective bar abuts by moving up against another bar, or when a respective bar moves down until it rests on another bar or another component. This method may cause damage to the motor and to other components of the blinds system. Furthermore, the method will work less efficiently when an angle between a vertical plane and the plane defined by the blinds departs from zero degrees. The method described herein determines abutting positions solely by the number of rotations of the drive shafts, which is more controllable and less prone to failures.

According to an embodiment, the drive assembly is accommodated in the fixed top bar. This allows for convenient placement of the drive assembly together with the blinds system.

According to an embodiment, contact terminals of the first motor and the second motor are accommodated centrally in the housing. Since the first and second motor are placed back to back in the housing, the contact terminals are close together. Also, the housing may be kept relatively small since the motors are mounted centrally in the housing.

According to an embodiment, the control unit is accommodated in between the first motor and the second motor inside the housing. This will allow for minimal wiring and a relatively small housing.

According to a further aspect of the invention, there is provided a blinds system comprising top down bottom up blinds, and wherein the blinds are limited in movement between a middle bar and a bottom bar, and wherein the middle bar and bottom bar are driven by a drive assembly as described herein.

According to an embodiment, the blinds system comprises a single user input element which is adapted to send a signal to the control unit, and which results in the middle bar assuming a predefined first position and the bottom bar assuming a predefined second position.

The blinds system is adapted to be placed in front of a door or window, meaning that the fixed top bar may be attached to a wall or other structure directly above the door or window. A user is able to position the middle bar and top bar into desired positions, in order to realize complete or partial coverage of the door or window, depending on the natural lighting preferences.

The user input element is adapted to communicate with the control unit. This communication may be wireless, such as microwave, optical, infrared, radiofrequency, WLAN, WPAN, Bluetooth, or it may be via electrical wires or optical fibres. When a user activates a single user input element, signals are sent to the control unit which include instructions for actuating both the middle bar and the top bar. In this way, it is not needed for the user to provide multiple input actions for actuating both bars; a single action is in principle enough. The bars can also be controlled separately.

Where throughout this application is referred to blinds, the person skilled in the art will understand that all similar systems for covering windows or doors are intended to be included in the present disclosure, the such as sunshades, sunscreens, Venetian blinds, plisse blinds or others. The blinds are preferably adapted to move vertically, but may as well depart from strictly vertical movement when a tilted window is supposed to be covered. The moving direction may define an angle of up to 90 degrees with respect to the vertical direction, depending on the orientation of the window that the blinds are supposed to cover.

### Short description of drawings

The present invention will be discussed in more detail below, with reference to the attached drawings, in which
Fig. 1 shows a schematic image of a blinds system according to an embodiment;
Figs. 2-4 show schematic images of blinds systems with middle bar and bottom bar in different positions, according to embodiments.

### Description of embodiments

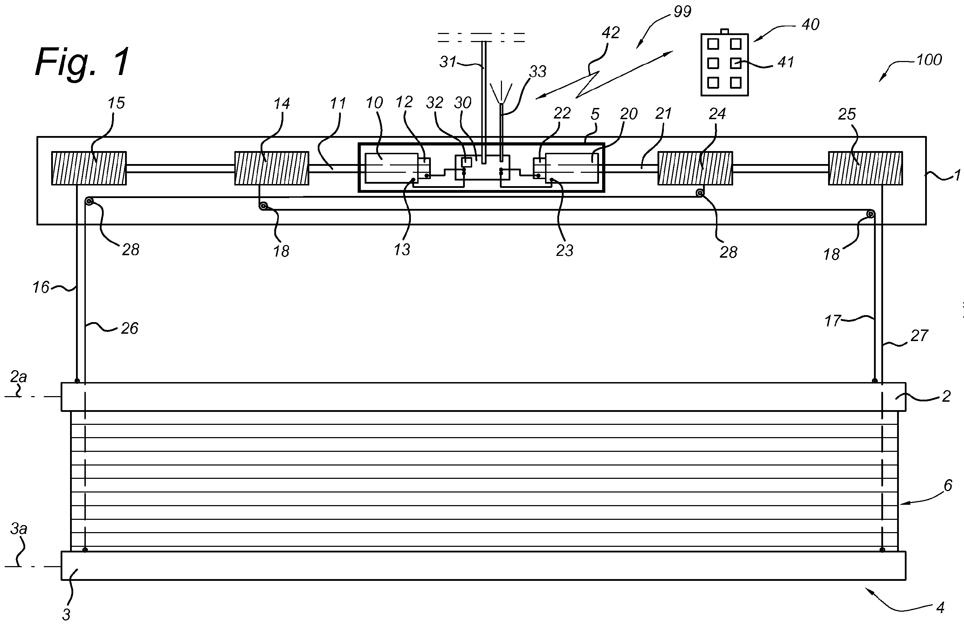

Figure 1 shows a schematic side view image of a top-down bottom-up blinds system 100, wherein the fixed top bar 1 is open to show the constituents including a drive assembly 99. Blinds 6 are disposed between a middle bar 2 in a first position 2a and a bottom bar 3 in a second position 3a. The bottom bar 3 can move until an end position 4 is reached. The position of the middle bar 2 is controlled by a first motor 10, located in the fixed top bar 1. The first motor 10 drives a first drive shaft 11 which is connected to a first inner spool 14 and a first outer spool 15. The first inner spool 14 and first outer spool 15 are adapted to wind cords 16, 17 which are connected to the middle bar 2. The position of the bottom bar 3 is independently controlled by a second motor 20, which drives a second drive shaft 21, which extends from the second motor 20 in a direction opposite to the first drive shaft 11. The first drive shaft 11 and second drive shaft 21 share the same longitudinal axis. The second drive shaft 21 is connected to a second inner spool 24 and a second outer spool 25. The second inner and outer spools 24, 25 are adapted to wind cords 26, 27 which are connected to the bottom bar 3. From both outer spools 15, 25 the cords 16, 27 extends vertically to the middle bar 2 and the bottom bar 3, respectively, while from the inner spools 14, 24 the cords 17, 26 first extend substantially horizontally until close to the opposite outer spool, after which they extend vertically along with other cords 27, 16, respectively. The cords 17, 26 change directions by means of wheels or axles 18, 28.

The first motor 10 and second motor 20 are together placed in a single housing 5, which is a pre-assembled unit. The first motor 10 and second motor 20 are via contact terminals 13, 23 communicatively connected to a circuit board 30, which is the control unit. The control unit 30 comprises means for storing and processing information, including a memory unit 32. It is powered via a power cable 31 which is connected to the grid or to a battery (not shown). The control unit 30 is also connected to signal receiving means 33 such as an antenna or receiver.

The drive assembly 99 further comprises means for determining the positions of the middle bar 2 and bottom bar 3, consisting of first and second magnet switches 12, 22 which count the number of rotations of the first and second drive shaft 11, 21, respectively. From the number of rotations the length of the cords 16, 17, 26, 27 extending from the spools 14, 15, 24, 25, and from that also the positions of the middle bar 2 and bottom bar 3 can be determined.

The system further comprises a remote control device 40. The remote control device 40 can wirelessly communicate with and transmit signals 42 to the control unit 30. The remote control device 40 is equipped with user input elements 41 such as buttons or knobs.

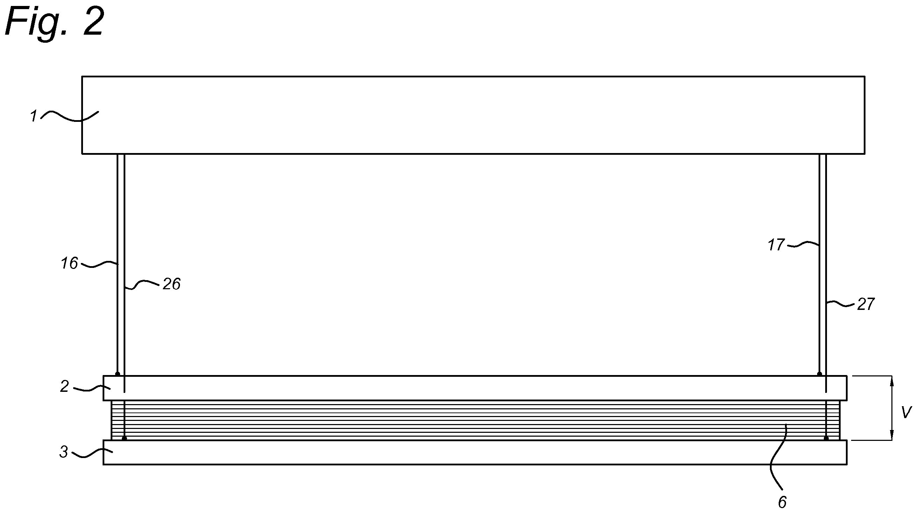

Figure 2 shows a schematic image of the blinds system of Figure 1, with the blinds 6 folded into the most compacted state. In this configuration, the middle bar 2 and bottom bar 3 are as close to each other as they can be. The difference in position is defined by the effective lengths of the cords 16, 17, 26, 27, which has been set by the number of rotations of the drive shafts 11, 21 of the motors 10, 20, as discussed above. The predefined minimum distance V is defined by the sum of the vertical size of the middle bar 2 and the minimum vertical size of the blinds 6.

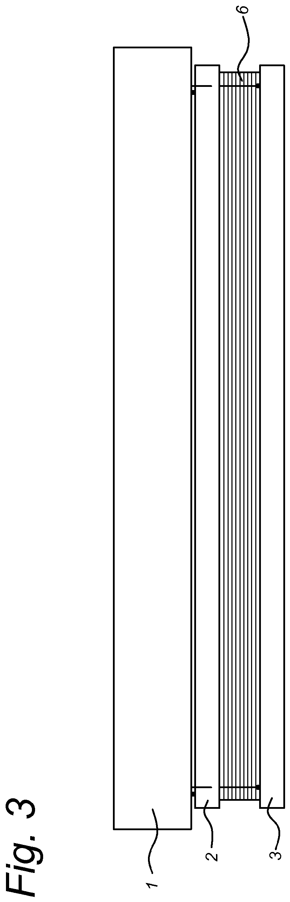

Figure 3 shows a schematic image of the blinds system of Figure 1, in most compact state. The middle bar 2 is in its most upward position, abutting the top bar 1. The blinds 6 are folded as much as possible such that the bottom bar 3 is close to the middle bar 2.

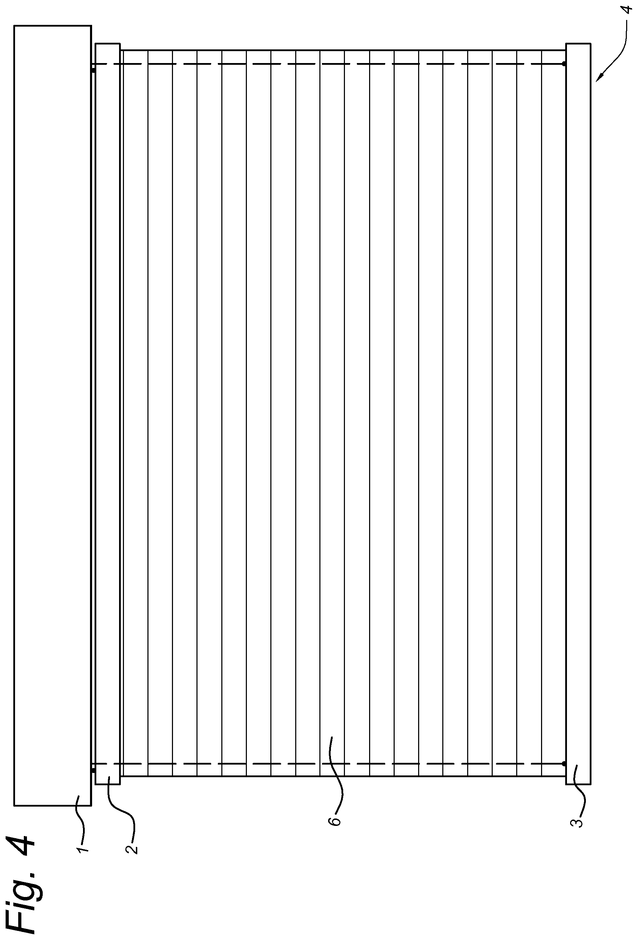

Figure 4 shows a schematic image of the blinds system of Figure 1. The blinds 6 are now extended over the largest possible area. The bottom bar 3 is in its end position 4 while the middle bar 2 abuts the top bar 1.

In an exemplary embodiment, the remote control device comprises six buttons: four default buttons for arbitrary upward and downward movements of the middle bar 2 and the bottom bar 3.

If a button is pressed and hold for 3 seconds, both the middle bar 2 and the bottom bar 3 will assume respective desired positions.

In this example, the upward button for the middle bar 2 will cause both bars 2, 3 to move upward and take their positions against the fixed top bar 1 and against each other, such as shown in Figure 3.

The downward button for the bottom bar 3 will cause the middle bar 2 move upward until against the fixed top bar 1, and the bottom bar 3 move downward to the end position 4, such as shown in Figure 4.

Besides the four default buttons, there are two buttons related to predefined standard positions of the middle bar 2 and the bottom bar 3. For example, one of the buttons may relate to a configuration which blocks sunlight in the morning, and the other button may relate to a configuration which blocks sunlight in the evening. Note that in these cases, a single button relates to standard positions of both the middle bar 2 and the bottom bar 3.

The present invention has been described above with reference to a number of exemplary embodiments as shown in the drawings. Modifications and alternative implementations of some parts or elements are possible, and are included in the scope of protection as defined in the appended claims.

## Claims

1. A drive assembly (99) for a top down bottom up blinds system (100) comprising blinds (6) which are limited in movement between a middle bar (2) and a bottom bar (3), wherein
the drive assembly comprises a first motor (10), a second motor (20) and a control unit (30), and wherein the first motor (10) is adapted to control the position of the middle bar,
the second motor (20) is adapted to control the position of the bottom bar,
both motors are driven by the control unit (30), and
the two motors (10, 20) and the control unit (30) are accommodated in a single housing (5), such that the drive assembly forms a pre-assembled unit,
and wherein the first motor (10) comprises a first drive shaft (11) and the second motor (20) comprises a second drive shaft (21),
**characterized in that** the first drive shaft (11) and the second drive shaft (21) are sharing the same longitudinal axis.

2. The drive assembly (99) according to claim 1, wherein the first drive shaft (11) extends from the first motor in a first direction, and the second drive shaft (21) extends from the second motor in a direction opposite to the first direction.

3. The drive assembly (99) according to any one of claims 1-2, further comprising counting systems (12, 22) for counting numbers of rotations of the first drive shaft (11) and the second drive shaft (21).

4. The drive assembly (99) according to claim 3, wherein the counting systems are first and second magnet switches (12, 22).

5. The drive assembly (99) according to any one of claims 3-4, wherein the drive assembly (99) further comprises a memory unit (32) configured to store the numbers of rotations of the first drive shaft (11) and second drive shaft (21).

6. The drive assembly (99) according to any one claims 3-5, wherein the control unit (30) is adapted to determine the positions of the middle bar (2) and bottom bar (3) based on the numbers of rotations of the first drive shaft (11) and the second drive shaft (21).

7. The drive assembly (99) according to any one claims 3-6, wherein the control unit (30) is configured to control the number of rotations of the first drive shaft (11) and the number of rotations of the second drive shaft (21) and wherein the control unit (3) is adapted to prevent collision of the middle bar (2) and the bottom bar (3), by maintaining a rotation difference between the number of rotations of the first drive shaft (11) and the number of rotations of the second drive shaft (21) which is larger than a minimum value (V) defined by a vertical size of the middle bar (2) and a minimum vertical distance of the blinds.

8. The drive assembly (99) according to any one of the preceding claims, wherein at least one motor (10, 20) is an electronically commutated motor, preferably wherein both motors are electronically commutated motors.

9. The drive assembly (99) according to any one of the preceding claims, wherein an end position (4) of the bottom bar is predefined in the control unit (30), and wherein the control unit is adapted to control the movement of the middle bar (2), which is limited between a fixed top bar (1) and the bottom bar (3), and wherein the control unit is adapted to control the movement of the bottom bar (3), which is limited between the middle bar (2) and the end position (4).

10. The drive assembly (99) according to any one of the preceding claims, wherein contact terminals (13, 23) of the first motor (10) and the second motor (20) are accommodated centrally in the housing.

11. The drive assembly (99) according to any one of the preceding claims, wherein the control unit (30) is accommodated in between the first motor (10) and the second motor (20) inside the housing (5).

12. A blinds system (100) provided with blinds (6), wherein the blinds are top down bottom up blinds, wherein the blinds are limited in movement between a middle bar (2) and a bottom bar (3) of the blinds system (100), the blinds system (100) further comprising a drive assembly (99) according to any one of claims 1-11, and wherein the middle bar and bottom bar are driven by the drive assembly (99).

13. The blinds system (100) according to claim 12, wherein the blinds system comprises a single user input element (41) which is adapted to send a signal (42) to the control unit (30), and which results in the middle bar (2) assuming a predefined first position (2a) and the bottom bar assuming a predefined second position (3a).

14. The blinds system (100) according to claim 12 or 13, wherein the blinds system comprises a fixed top bar (1) and wherein the drive assembly (99) is accommodated in the fixed top bar (1).

## Patentansprüche

1. Antriebsbaugruppe (99) für ein deszendentes/aszendentes Jalousiensystem (100) mit Jalousien (6), deren Bewegung zwischen einer Mittelstrebe (2) und einer Bodenstrebe (3) begrenzt ist, wobei
die Antriebsbaugruppe einen ersten Motor (10), einen zweiten Motor (20) sowie eine Steuerungseinheit (30) aufweist, und wobei der erste Motor (10) eingerichtet ist, die Position der Mittelstrebe zu steuern, der zweite Motor (20) eingerichtet ist, die Position der Bodenstrebe zu steuern,
beide Motoren durch die Steuerungseinheit (30) angetrieben sind, und
die beiden Motoren (10, 20) und die Steuerungseinheit (30) in einem einzigen Gehäuse (5) aufgenommen sind,
sodass die Antriebsbaugruppe eine vormontierte Einheit ausbildet,
und wobei der erste Motor (10) eine erste Antriebswelle (11) aufweist und der zweite Motor (20) eine zweite Antriebswelle (21) aufweist, **dadurch gekennzeichnet, dass**
sich die erste Antriebswelle (11) und die zweite Antriebswelle (21) dieselbe Längsachse teilen.

2. Antriebsbaugruppe (99) nach Anspruch 1, wobei sich die erste Antriebswelle (11) von dem ersten Motor in einer ersten Richtung erstreckt und sich die zweite Antriebswelle (21) von dem zweiten Motor in einer Richtung erstreckt, die der ersten Richtung entgegengesetzt ist.

3. Antriebsbaugruppe (99) nach einem der Ansprüche 1-2, ferner mit Zählsystemen (12, 22) zum Zählen der Anzahl von Drehungen der ersten Antriebswelle (11) und der zweiten Antriebswelle (21).

4. Antriebsbaugruppe (99) nach Anspruch 3, wobei die Zählsysteme erste und zweite Magnetschalter (12, 22) sind.

5. Antriebsbaugruppe (99) nach einem der Ansprüche 3-4, wobei die Antriebsbaugruppe (99) ferner eine Speichereinheit (32) aufweist, die eingerichtet ist, die Anzahl von Drehungen der ersten Antriebswelle (11) und der zweiten Antriebswelle (21) zu speichern.

6. Antriebsbaugruppe (99) nach einem der Ansprüche 3-5, wobei die Steuerungseinheit (30) eingerichtet ist, die Positionen der Mittelstrebe (2) und Bodenstrebe (3) basierend auf der Anzahl von Drehungen der ersten Antriebswelle (11) und der zweiten Antriebswelle (21) zu bestimmen.

7. Antriebsbaugruppe (99) nach einem der Ansprüche 3-6, wobei die Steuerungseinheit (30) eingerichtet ist, die Anzahl von Drehungen der ersten Antriebswelle (11) und die Anzahl von Drehungen der zweiten Antriebswelle (21) zu steuern, und wobei die Steuerungseinheit (3) eingerichtet ist, eine Kollision der Mittelstrebe (2) und der Bodenstrebe (3) zu verhindern, indem sie eine Drehdifferenz zwischen der Anzahl von Drehungen der ersten Antriebswelle (11) und der Anzahl von Drehungen der zweiten Antriebswelle (21) aufrechterhält, die größer ist als ein minimaler Wert (V), der durch eine vertikale Größe der Mittelstrebe (2) und einen minimalen vertikalen Abstand der Jalousien (6) definiert ist.

8. Antriebsbaugruppe (99) nach einem der vorstehenden Ansprüche, wobei mindestens ein Motor (10, 20) ein elektronisch kommutierter Motor ist, wobei vorzugsweise beide Motoren elektronisch kommutierte Motoren sind.

9. Antriebsbaugruppe (99) nach einem der vorstehenden Ansprüche, wobei eine Endposition (4) der Bodenstrebe in der Steuerungseinheit (30) vordefiniert ist, und wobei die Steuerungseinheit eingerichtet ist, die Bewegung der Mittelstrebe (2) zu steuern, die zwischen einer fixierten oberen Strebe (1) und der Bodenstrebe (3) begrenzt ist, und wobei die Steuerungseinheit eingerichtet ist, die Bewegung der Bodenstrebe (3) zu steuern, die zwischen der Mittelstrebe (2) und der Endposition (4) begrenzt ist.

10. Antriebsbaugruppe (99) nach einem der vorstehenden Ansprüche, wobei Kontaktanschlüsse (13, 23) des ersten Motors (10) und des zweiten Motors (20) in dem Gehäuse mittig aufgenommen sind.

11. Antriebsbaugruppe (99) nach einem der vorstehenden Ansprüche, wobei die Steuerungseinheit (30) in dem Gehäuse (5) zwischen dem ersten Motor (10) und dem zweiten Motor (20) aufgenommen ist.

12. Jalousiensystem (100), das mit Jalousien (6) versehen ist, wobei die Jalousien deszendente/aszendente Jalousien sind, wobei die Bewegung der Jalousien zwischen einer Mittelstrebe (2) und einer Bodenstrebe (3) des Jalousiensystems (100) begrenzt ist, wobei das Jalousiensystem (100) ferner eine Antriebsbaugruppe (99) nach einem der Ansprüche 1-11 aufweist, und wobei die Mittelstrebe und die Bodenstrebe durch die Antriebsbaugruppe (99) angetrieben sind.

13. Jalousiensystem (100) nach Anspruch 12, wobei das Jalousiensystem ein einziges Nutzereingabeelement (41) aufweist, dass eingerichtet ist, ein Signal (42) an die Steuerungseinheit (30) zu senden, und was dazu führt, dass die Mittelstrebe (2) eine vordefinierte erste Position (2a) annimmt und die Bodenstrebe vordefinierte zweite Position (3a) annimmt.

14. Jalousiensystem (100) nach Anspruch 12 oder 13, wobei das Jalousiensystem eine fixierte obere Strebe (1) aufweist, und wobei die Antriebsbaugruppe (99) in der fixierten oberen Strebe (1) aufgenommen ist.

## Revendications

1. - Ensemble d'entraînement (99) pour un système de store descendant et ascendant (100), comprenant un store (6) qui est limité en mouvement entre une barre centrale (2) et une barre inférieure (3),
l'ensemble d'entraînement comprenant un premier moteur (10), un second moteur (20) et une unité de commande (30), et le premier moteur (10) étant apte à commander la position de la barre centrale,
le second moteur (20) étant apte à commander la position de la barre inférieure,
les deux moteurs étant entraînés par l'unité de commande (30), et
les deux moteurs (10, 20) et l'unité de commande (30) étant reçus dans un seul boîtier (5), de telle sorte que l'ensemble d'entraînement forme une unité préassemblée, et
le premier moteur (10) comprenant un premier arbre d'entraînement (11) et le second moteur (20) comprenant un second arbre d'entraînement (21),
**caractérisé par le fait que** le premier arbre d'entraînement (11) et le second arbre d'entraînement (21) partagent le même axe longitudinal.

2. - Ensemble d'entraînement (99) selon la revendication 1, dans lequel le premier arbre d'entraînement (11) s'étend à partir du premier moteur dans une première direction, et le second arbre d'entraînement (21) s'étend à partir du second moteur dans une direction opposée à la première direction.

3. - Ensemble d'entraînement (99) selon l'une quelconque des revendications 1 et 2, comprenant en outre des systèmes de comptage (12, 22) pour compter des nombres de rotations du premier arbre d'entraînement (11) et du second arbre d'entraînement (21).

4. - Ensemble d'entraînement (99) selon la revendication 3, dans lequel les systèmes de comptage sont des premier et second commutateurs magnétiques (12, 22).

5. - Ensemble d'entraînement (99) selon l'une quelconque des revendications 3 et 4, dans lequel l'ensemble d'entraînement (99) comprend en outre une unité de mémoire (32) configurée pour stocker les nombres de rotations du premier arbre d'entraînement (11) et du second arbre d'entraînement (21).

6. - Ensemble d'entraînement (99) selon l'une quelconque des revendications 3 à 5, dans lequel l'unité de commande (30) est apte à déterminer les positions de la barre centrale (2) et de la barre inférieure (3) sur la base des nombres de rotations du premier arbre d'entraînement (11) et du second arbre d'entraînement (21).

7. - Ensemble d'entraînement (99) selon l'une quelconque des revendications 3 à 6, dans lequel l'unité de commande (30) est configurée pour commander le nombre de rotations du premier arbre d'entraînement (11) et le nombre de rotations du second arbre d'entraînement (21), et dans lequel l'unité de commande (30) est apte à empêcher une collision de la barre centrale (2) et de la barre inférieure (3), par maintien d'une différence de rotation entre le nombre de rotations du premier arbre d'entraînement (11) et le nombre de rotations du second arbre d'entraînement (21) qui est supérieure à une valeur minimale (V) définie par une dimension verticale de la barre centrale (2) et une distance verticale minimale du store.

8. - Ensemble d'entraînement (99) selon l'une quelconque des revendications précédentes, dans lequel au moins un moteur (10, 20) est un moteur à commutation électronique, de préférence dans lequel les deux moteurs sont des moteurs à commutation électronique.

9. - Ensemble d'entraînement (99) selon l'une quelconque des revendications précédentes, dans lequel une position d'extrémité (4) de la barre inférieure est prédéfinie dans l'unité de commande (30), et dans lequel l'unité de commande est apte à commander le mouvement de la barre centrale (2), qui est limité entre une barre supérieure fixe (1) et la barre inférieure (3), et dans lequel l'unité de commande est apte à commander le mouvement de la barre inférieure (3), qui est limité entre la barre centrale (2) et la position d'extrémité (4).

10. - Ensemble d'entraînement (99) selon l'une quelconque des revendications précédentes, dans lequel des bornes de contact (13, 23) du premier moteur (10) et du second moteur (20) sont reçues de manière centrale dans le boîtier.

11. - Ensemble d'entraînement (99) selon l'une quelconque des revendications précédentes, dans lequel l'unité de commande (30) est reçue entre le premier moteur (10) et le second moteur (20) à l'intérieur du boîtier (5).

12. - Système de store (100) comprenant un store (6), dans lequel le store est un store descendant et ascendant, le store étant limité en mouvement entre une barre centrale (2) et une barre inférieure (3) du système de store (100), le système de store (100) comprenant en outre un ensemble d'entraînement (99) selon l'une quelconque des revendications 1 à 11, et la barre centrale et la barre inférieure étant entraînées par l'ensemble d'entraînement (99).

13. - Système de store (100) selon la revendication 12, dans lequel le système de store comprend un seul élément d'entrée utilisateur (41) qui est apte à envoyer un signal (42) à l'unité de commande (30), et qui conduit à ce que la barre centrale (2) prenne une première position prédéfinie (2a) et la barre inférieure prenne une seconde position prédéfinie (3a).

14. - Système de store (100) selon l'une des revendications 12 ou 13, dans lequel le système de store comprend une barre supérieure fixe (1) et dans lequel l'ensemble d'entraînement (99) est reçu dans la barre supérieure fixe (1).
